# EUROPEAN PATENT SPECIFICATION

(11) **EP 1 118 379 B1**
(45) Date of publication and mention of the grant of the patent: **22.06.2005**
(21) Application number: 01610004.2
(22) Date of filing: 12.01.2001
(51) Int. Cl.: B01F 3/12, G01N 35/00, G01N 33/53

(54) **Mixing module for use with an analytic apparatus**
Mischmodul für eine Analysevorrichtung
Module de mélange pour un appareil d'analyse

(30) Priority: 13.01.2000 DK 200000046
(43) Date of publication of application: 25.07.2001
(73) Proprietor: Laboratory, Automation & Technology A/S, 2500 Valby (DK)
(72) Inventor: Bogevig, Steffen, 2500 Valby (DK)
(74) Representative: Sundien, Thomas

(56) References cited:
- DE-U- 29 901 448
- US-A- 5 266 269

## Description

### 1. Technical field

The present invention relates to an automated analytical apparatus as well as an assembly therefore, and more particularly, concerns an automatic analyzer for the chemical, immunochemical, molecular, environmental, industrial and diagnostic testing of substances allowing fully automatic tests to be performed including the preparation of reagents just prior to the chemical or immunochemical testing of substances.

### 2. Description of the Prior Art.

There are many known and available analyzers for the chemical, environmental, industrial, diagnostic, immunochemical and/or biological testing of samples. In many instances, chemical tests are performed on biological fluids such as urine, blood serum, plasma, cerebrospinal fluid and the like, or any other biological or non-biological fluid. A sample of this fluid is typically combined with a prepared reagent liquid, and the resulting mixture, or subsequent mixtures, is analyzed by the apparatus for one or more characteristics of the sample. Reliance on automated chemical or clinical analyzers improves the efficiency of the laboratory procedures inasmuch as the technician typically has fewer tasks to perform than might be required if manual analysis were conducted. Moreover, automated chemical or clinical analyzers usually provide results much more rapidly, while also placing emphasis on accuracy and repeatability of the various tests.

A typical automated chemical analyzer available for many routine laboratory tests includes means for performing the following steps: means for supporting a plurality of samples to be analyzed, means for supporting a plurality of reaction vessels, means for delivering given amounts of samples to be analyzed into said reaction vessels, means for delivering given amounts of reagents into said reaction vessels, the samples and the reagents together forming test liquids, and means for measuring a property of said test liquids. Indeed, some of the above steps may be dispensed with; for example, the samples could be placed in their respective test reaction vessels directly into the analyzer. Also, one or more additional steps may be added, for example an incubation station or a washing station for emptying and washing the reaction vessels before measuring deposits of the chemical reaction left in the reaction vessel.

Another feature that is common to presently available analyzers is the inclusion of the various reagents within the apparatus itself or placed near the apparatus for piping thereinto. Liquid reagents, in bulk form, are selected for the various types of tests that are to be performed on the sample liquids, and are stored in or near the apparatus. Reagent delivery units, such as pumps or the like, along with valves, control mechanisms and pipes are included in these automated analyzers so that different reagents can be used according to the type of test to be performed.

As follows from above, modern analyzers can be set or programmed to perform an almost indefinite number of procedures, handling and processing samples, reaction vessels and reagents, and this in a fully automated fashion. Further, many modern analyzers are highly modular and be set up to control and cooperate with many different types of equipment.

However, some reagents are supplied as kits containing, for example, tablets that need to be dissolved in a media, typically a liquid, just before use, because the dissolved reagent expires in a very short period of time. Normally the laboratory technician performs this procedure manually during the test. Depending on the type of analysis conducted, this may require that the technician has to mix the critical reagent just prior to running a batch of samples to be analyzed, or, if the reagent is to be used late in the test setup such that early preparation is not possible due to the limited time the dissolved reagent can be used, the technician has to be attendant through the whole of the procedures.

An analytical reagent mixing apparatus for performing sequential analytical reactions is known from EP-A-0 320 752. The apparatus comprises an analytical reagent assembly comprising first and second receptacles having first and second analytical reagents disposed therein, a lid member engaged with the first and second receptacles comprising means for providing open liquid communication between the first and second receptacles, and means for rotating the assembly. As appears, the two reagents are brought together using a communication for conducting liquids, and are mixed using a rotational movement. This apparatus is thus limited to mix liquid reagents and necessitates a relatively complex, rotational mixing procedure which cannot be established by a normal analyzer. Further, this known apparatus requires cleaning of two receptacles as well as the conduit after each use.

Further reagent mixing apparatus are disclosed in US-A-5 266 269 and DE-29 901 448 U.

The present invention has for its object to provide a novel and useful automatic chemical analyzer for general purposes, which in a simple and cost-effective way mitigates the above-mentioned drawbacks of the known automatic chemical analyzers by avoiding the cumbersome just-in-time preparation of critical reagents. The present invention has as a further object to provide an assembly or module, which can be used with known analyzers in order to achieve the desired object.

### 3. Disclosure of the invention

In a first aspect the present invention provides an analyser as defined in claims 6-10.

The term reagent is in this context used for any constituent for such a mixed reagent, for example pure water would also be a reagent although it is virtually inert and does not actually react in the subsequent chemical reaction. The term retain is in this context used to describe any arrangement which will function as a storage for a reagent, thus also a planar surface suspending the reagent would be considered to retain the reagent.

The terms release and dispense are used to indicate that a first reagent is "dropped" into a second reagent without being conducted through a conduit, this in contrast to mixing procedures where reagents are, for example, pumped or brought to flow through conduits such as known from EP-A-0 320 752. Traditionally the term release is used for solid reagents such as tablets whereas dispense is used for liquids and powders. In the context of this application, the term dispense is not used in the meaning of "dissolve".

It may be argued that known analytical equipment could be modified or programmed to achieve the same objects, for example by transferring a first liquid reagent from one of the existing receptacles into a vessel in which a solid reagent to be mixed is placed, however, such a method is without the scope of the present invention for a number of reasons. First of all, this would result in a much more complicated programming which would be different for each type of reagent to be mixed, i.e. for each mixing procedure the relevant liquid should be specified (and supplied to the relevant receptacle if not there already) together with the relevant amount. Further, the location of the mixing receptacle would also have to be defined. If several mixing procedures were to be conducted for a single test setup, the programming would be even more complicated with the build-in risk of making mistakes. All these problems are eliminated according to the present invention as the laboratory technician merely has to perform the same preparing steps as hitherto, i.e. for a given amount of a first reagent, typically a tablet, to manually dispense the corresponding amount of the foreseen liquid or media into a mixing vessel. The only difference will be that instead of the actual mixing just prior to use, the technician will place the prepared mixing module in the analyzer and tell it by corresponding programming that the mixing module shall be actuated at a given point of time in the test procedures. This is a much simpler and much more reliable way of performing a fully automatic analysis.

In a second aspect the present invention provides a mixing assembly or module as defined in claims 1-5.

Normally the first reagent is in solid form, for example in the form of tablets, powders, pellets or gels, and the second reagent is in the form of a liquid or matrix, however, in principle it would be possible to mix any reagents in any form. Further, the module may contain more than one receptacle each being displaceable between a first and a second position as well as each displaceable receptacle may be adapted to receive a number of reagents, such a receptacle being displaceable between more than two positions in order to dispense said number of reagents, for example at different locations or at different times. Correspondingly, the module may contain two or more receptacles into which reagents are dispensed thus acting as mixing receptacles. In this way a number of different mixed reagents could be prepared or a number of identical mixed reagents could be prepared to different times.

In a preferred embodiment the module comprises a base adapted to receive one or more separate receptacles, this allowing for ease of use and cleaning.

In another preferred embodiment the module comprises one or more displaceable receptacles, or just means for receiving such receptacles, detachably mountable to the base, this allowing for ease of cleaning or for the use of disposable receptacles.

In a further preferred embodiment the module comprises a covering element, which serves for keeping the reagents dark, so that light do not harm the reagents while they are placed in or on the respective receptacle(s) waiting for the mixing procedure. This covering may also serve as a barrier that both guides the dispensed reagent into the mixing receptacle as well as prevents splashes when a reagent is dispensed into a liquid.

Although the present invention relates to the automation of procedures, the present invention can advantageously be used in both manual, semiautomatic as well as fully automatic setups.

Further problems, solutions and advantages will be apparent from the accompanying disclosure of a preferred embodiment.

### 4. Brief description of the drawings

FIG. 1 is a perspective view schematically illustrating the major operative components of a typical prior art analyzer.
FIG. 2 is a perspective view of a vessel holder to be used as part of a mixing module according to the invention.
FIG. 3 is a perspective view of a tray element to be used as part of a mixing module according to the invention.
FIG. 4 is a perspective view of a flap element to be used as part of a mixing module according to the invention.
FIG. 5 is a perspective view of a cover element adapted to be used together with a mixing module according to the invention.
FIGS. 6a and 6b show a schematic representation of the drop motion of the tray element as initiated by displacing the flap element.

### 5. Description of the preferred embodiments

Before describing embodiments of the present invention, a typical prior art chemical analysis apparatus as well as a method of using it will be described. The different details described in the following do not relate specifically to the present invention, however, they are illustrative for the type of apparatus and analysis to which the present invention relates and will provide a better understanding of the problem underlying the present invention.

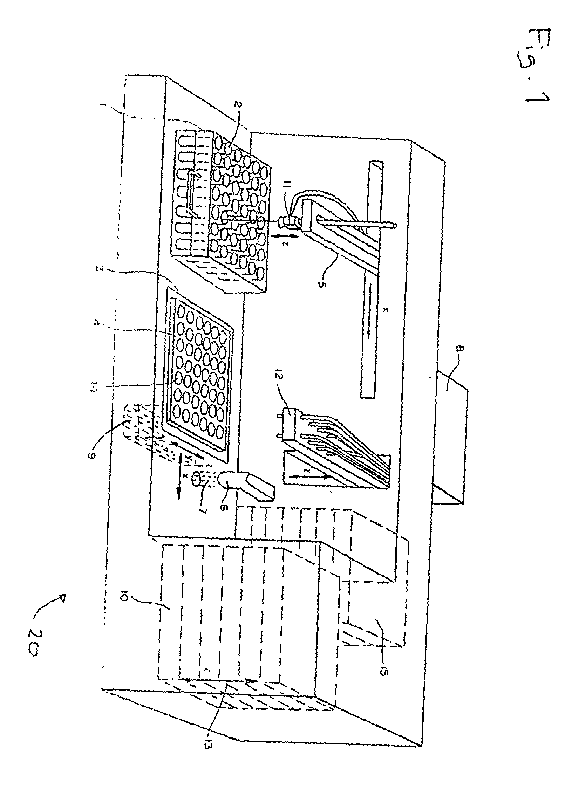

The analysis machine illustrated in figure 1 is generally designated 20. The machine and its method of operation are described below in detail with the aid of some examples. The samples or test fluids selected for analysis are situated on a primary rack 1 in positions assigned according to a computer program stored within the machine. In the same rack reagents required for, for example, an enzyme immune test (EIA or ELISA) can also be positioned. The primary rack 1 is placed at the designated position of the analysis equipment and the computerized automatic machinery is set into operation. The analyzer then removes the amounts of test fluids and reagents necessary for analysis by means of the pipette 11 supported on the sample distribution arm 5 and thereby conveys these materials to a microtiterplate 4, sometimes referred to as a micro titration plate, comprising a large number of reaction vessels and located on a designated point of the worktable 3. After the samples have been distributed, further reagents may be added from receptacles contained within the machine (not shown) to each of the reaction vessels. These receptacles could also have been placed directly on the working table 3 of the machine in order to provide better access. The reagents can either be distributed by the single channel pipette 11 on distribution arm 5 or by one or more pipettes arranged on an additional arm (not shown).

The microtiterplate 4 that has been prepared in such a fashion is then moved into the incubator 10, located on the work table 3, which can be moved in any desired x or y direction in the horizontal plane. The role of the incubator 10 is to store the liquids located on the microtiterplate 4 at an increased temperature (for example 25 degree to 37 degree C) in order, for example, to coat the microtiterplate 4 with antigens or antibodies. Because the incubation period typically is between 30 and 120 minutes, a lift 13 is provided in the incubator, which allows for the vertical storage of up to six microtitration plates 4. Following successful incubation, the microtiterplate 4 is again removed from the incubator 10 and returned to its original position on the work table 3 and is rinsed by means of the four-way peristaltic pump having the multiple head 12. The rinsing fluid drains into the rinse trough 9.

Hereafter further reagents may be added and the samples may be returned to the incubator 10. Thus, this procedure (cleaning/addition of reagents/incubation) can be repeated several times, depending upon the test being performed, for example a test based on coating with antigens or antibodies. A color reaction, for example catalyzed by a peroxidase enzyme, which is necessary for the subsequent photometric measurement, occurs in this last step. The color reaction can be halted either by adding a suitable solution or be measured directly after a programmed reaction interval. Indeed, the final measurement can also be based upon other types of reactions.

The microtitration plate 4 is then passed through the beam path 7 of the photometer 6 located on the worktable. At this point, the photometric measurement of the individual colored solutions or coatings that are located in recesses or vessels 14 of the microtiterplate 4 can take place.

Once the photometric measurement has been taken, the microtiterplate 4 can be removed manually from the worktable 3 and discarded.

Furthermore, all work steps are performed automatically and are monitored by a programmable computer 8. A separate computer, for example an IBM PC, essentially controls the analyzer itself whereas a computer integrated into the analysis equipment serves only to distribute the commands to the different subcomponents, as well as for it's monitoring.

As also described in the introductory portion of the present specification, some of the reagents may need to be mixed just prior to use.

Therefore, according to the invention, a chemical analyzer is provided with a module which only needs to be loaded with the desired reagents, placed into the analyzer and then activated in order to prepare a freshly mixed reagent. With regard to the analyzer illustrated in figure 1, this could be done by enlarging the worktable 3 to the left of the area for the primary rack 1 so that the module according to the invention could be received at a specific place. In its broadest concept, the module is adapted to receive at least first and second reagents to be mixed as well as means for containing the mixed reagents, the analyzer comprising means for actuating the assembly in order to mix the reagents. With regard to the analyzer 5, actuation could take place by specifically programming the arm 5 (allowed to travel further to the left than illustrated) to execute the actuating movement, which, for example, could be as simple as depressing an element on the module. After mixing the reagents, the arm 5 could apply the freshly mixed reagent to the vessels 14 using the pipette 11. Indeed, any additional means (not shown) could be used in order to actuate the mixing procedure, for example actuators in form of solenoids, motors, pneumatics or mechanically driven means. The actuating means could also be in the form of an electrical signal actuating a responding means comprised in the mixing module. However, as many modern analyzers are freely programmable, it would be convenient to use the provided manipulating means in the form of "robot" arms, which often are allowed to move freely within the confined space. It is preferred that the actual time of mixing is executed as an integral part of the overall program running the full test, such that the reagents are mixed just prior to use.

In preferred embodiments, the analyzer according to the invention may contain more than one of the above described mixing modules as well as the individual mixing modules could be adapted and loaded to be actuated a number of times before having to be reloaded. In this manner a number of reagents could be mixed to different times within the overall preprogrammed and prepared test setup.

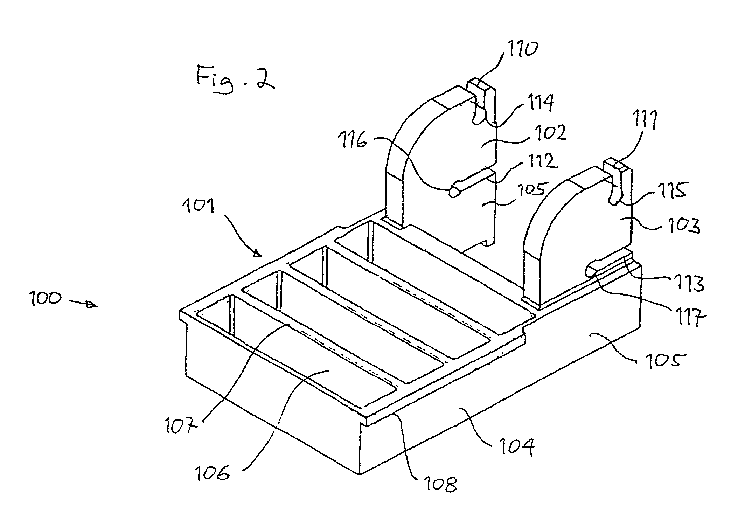

Next a preferred embodiment of a mixing module according to the invention will be described with reference to figures 2 through 4.

In the described preferred embodiment, the mixing module comprises a vessel holder adapted to hold at least one vessel serving as a receptacle for a liquid or media, a tray element pivotally suspended relative to the base and a flap element pivotally suspended relative to the base for suspending the tray in a first position. In the following the terms upwards, downwards, forwards and rearwards are used with reference to the mixing module being placed in its normal position of use, i.e. on a planar horizontal surface with the vessels or vessel compartments facing substantially upwards.

Next the vessel holder will be described with reference to figure 2.

As seen in figure 2 the vessel holder 100 comprises a lower base portion 101 as well as two wall members 102, 103 protruding upwards from the base portion. The base portion has a vessel holding section 104 and two wall sections 105 extending in a rearwards direction with respect to the vessel holding section. The vessel holding section comprises in the shown embodiment four vessel compartments 106 delimited by rim portions 107, each adapted to securely hold a vessel. The vessel compartments may be closed at the bottom thereof or be just open frames allowing for ease of cleaning. Indeed, when the compartments are formed with a single upwards-facing opening, they could also be used directly as vessels. The upper rims of the individual compartments define a plane of reference which in use is intended to be arranged substantially horizontal. The vessel holding section may be provided with outwards oriented rim members 108 to help secure the mixing module in the analyzer and for facilitating handling. The sidewalls of the vessel holding section extend rearwards into a pair of parallelly arranged wall sections 105, each wall section supporting an upwardly, in use vertically, directed wall member 102, 103.

The wall members comprise two pairs of slots, an upper pair of slots 110, 111 and a lower pair of slots 112, 113, the slots in each of the pairs of slots being arranged in the respective wall member in the same plane. The upper slots are adapted to pivotally receive a tray element to be described below. In the illustrated embodiment the upper slots each has an upwards facing opening and an enlarged portion 114, 115 at the inner end thereof in which axle members of the tray member can be pivotally suspended. The lower slots are adapted to pivotally receive a flap element also to be described below. In the illustrated embodiment the lower slots each has a rearwards facing opening and an enlarged portion 116, 117 at the inner end thereof in which axle members of the flap member can be pivotally suspended. The slots could also be replaced with pairs of bores in which the axle members of the tray respectively the flap member could be retained, however, the illustrated slots provide for ease of disassembling and thereby cleaning.

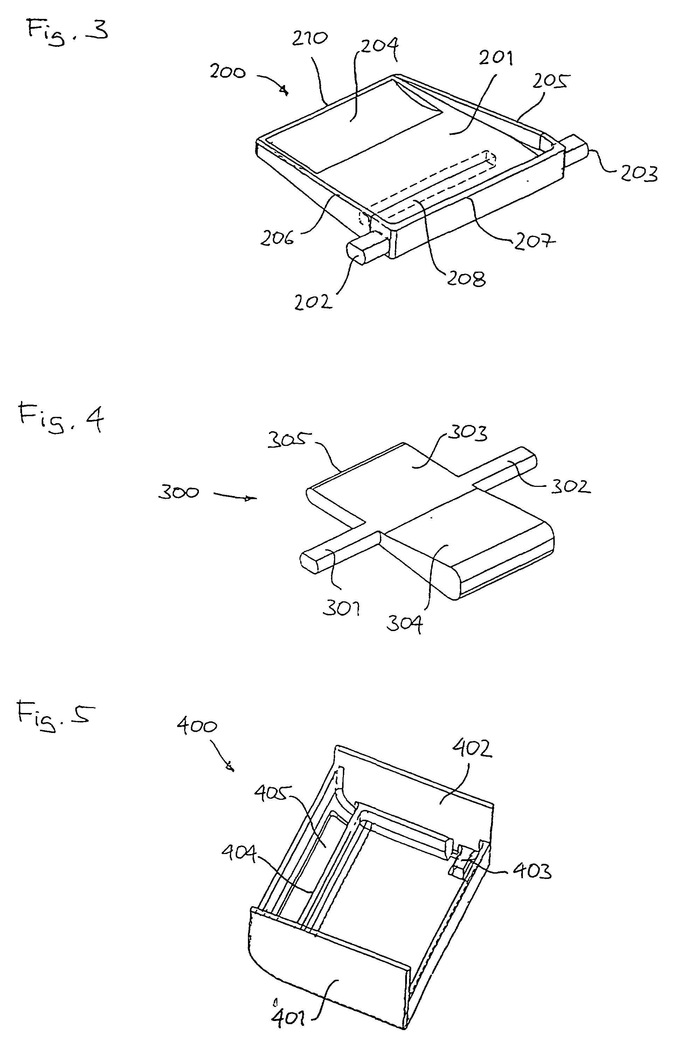

Next the tray element will be described with reference to figure 3.

The tray element 200 is adapted to support or retain a reagent in solid form when the tray element is supported in an initial first position. The tray element basically comprises a relative flat tray portion 201 having two outwards extending, coaxially arranged axle members 202, 203. The illustrated axle members each has a pair of opposed coplanar surfaces, which allow the axle members to be introduced into the narrow portion of the above-described upper slots. When the axle members have reached the enlarged inner portions 114, 115 of the slots they are free to pivot therein. As seen in figure 3 the tray portion comprises a trough-like depression 204 close to the front edge 210 thereof, a pair of sloping rims 205, 206 at the sides thereof and a further rim 207 at the rear end thereof as well as a bar member 208 at the downwardly facing lower surface (illustrated in broken line). The through is intended to retain the solid reagent when the mixing module is loaded, the rims serving as a further retaining means. The lower bar member is intended as a stop for the flap member as will be described below. When the mixing module is actuated the through portion of the tray element is adapted to pivot downwards to a second position in which the retained reagent will be released from the tray element and be transferred to one of the vessels or compartment for subsequent mixing. As will be apparent, the reagent will simply slide off the tray element under the influence of gravity and then drop into the desired vessel or compartment, normally the vessel closest to the wall members.

Next the flap element will be described with reference to figure 4.

The flap element 300 is adapted to support the tray element when the tray element is supported in its initial first position. The flap element basically comprises a relative flat portion with flat surfaces and having two outwards extending, coaxially arranged axle members 301, 302. The illustrated axle members each has a pair of opposed coplanar surfaces, which allows the axle members to be introduced into the narrow portions 116, 117 of the above-described lower slots. When the axle members have reached the enlarged inner portion of the slots they are free to pivot therein. As can be seen in figure 4 is the flap element formed with an upper, shorter portion 303 and a lower, longer, thicker and thus heavier portion 304. This configuration helps the flap element to be suspended in a vertical position with the lower portion pointing downwards when mounted between the wall members of the vessel holder. The upper edge 305 of the flap element is adapted to support the lower surface of the tray element in its initial first position. The bar member of the tray element is arranged such that the uppermost portion of one of the flat surfaces of the flap element can be positioned against it when the tray element is positioned in a substantially horizontal position (corresponding to its initial first position) and the flap element is positioned in a substantially vertical position (corresponding to an initial first position).

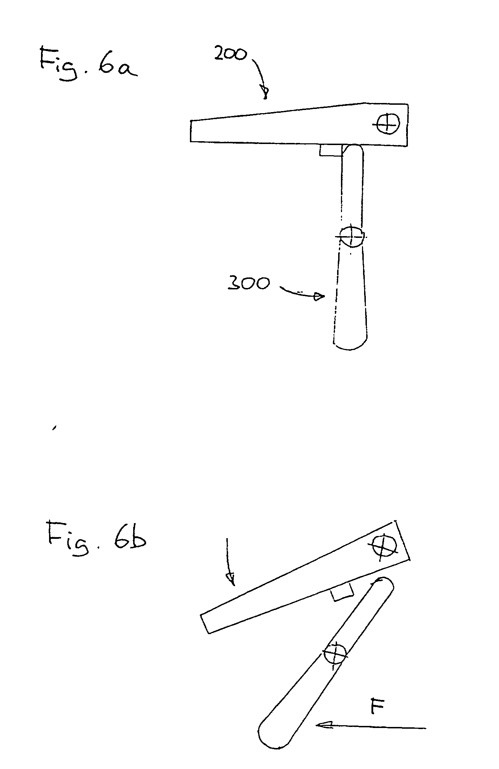

In use as illustrated in figures 6a and 6b, the flap element is actuated by an actuating force F applied to the lower, longer and thicker portion of the element in a forwards direction, i.e. in the direction of the vessels, this resulting in the upper, shorter portion of the element pivoting rearwards thus removing the support for the tray. As the support for the tray element is thus displaced, the through portion of the tray element will pivot downwards to a second position in which the retained reagent will be released from the tray element as also described above.

Indeed, in order to function as described above, the axles, slots and other portions of the module should be placed and dimensioned to assure the desired functionality.

If desired the mixing module could be used with a cover member arranged over the tray element and the corresponding vessel, this serving, for example, as a splash shield when the solid reagent is dropped into the liquid for subsequent mixing. The cover may also serve to protect reagents that are light sensitive. Indeed, the cover member should allow access for the pipettes of the analyzer to the mixed reagent.

Figure 5 shows a cover 40C adapted to protect a reagent for ambient light. The illustrated cover is seen from below with its normally downwardly facing inner surface facing towards the viewer. The side walls 402, 402 are adapted to grip or to be positioned around the outside of the wall members 102, 103 with protrusions 403 (only one can be seen in the figure) adapted to grip into the upper slots 110, 111 in order to hold the cover in place. In order to assure a high degree of light protection the cover comprises an edge portion 404 adapted to cover the forwardly facing edge 210 of the tray element 200; this is necessary as the cover is equipped with an opening 405 allowing a pipette to reach the mixing vessel situated under the cover.

In the following a mode of use of the mixing module will be described.

When loading the mixing module the empty vessel holder is initially placed on a planar, preferably planar surface. Then the individual vessels are mounted in their respective compartments - indeed, the compartments may be used as vessels themselves, however, this would render subsequent cleaning more laborious. Then the vessels are filled with liquid reagents, which for the three first vessels would be reagents that are not time sensitive, and for the last vessel would be one of the reagents for subsequent mixing. Thereafter the flap element is mounted in its vertical position and the tray element in its horizontal position supported by the flap element. Then the solid reagent is placed on the through portion of the tray element and finally, if desired, the cover element is put in place. Now the mixing module is prepared and can be inserted in the analyzer in its specified position. When the analyzer has been fully prepared it can be started and the automated procedures will start to run. Just prior to the intended use, the reagents to be mixed are brought together by actuating the mixing module, i.e. pushing the flap element as described above. This can, for example, be done by programming one of the analyzer's general-purpose robot arms to perform the desired movement, or by a specific solenoid type trigger device also controlled by the analyzer.

Indeed, the mixing module could also be prepared by steps in another sequence.

In preferred embodiments the mixing module is adapted and dimensioned to be used together with specific analyzers. For example, the mixing module could be adapted to be used with a Genesis RMP analytical workstation, supplied by Tecan AG Analytische Instrumente, Hombrechtikon, Switzerland. To use with such a workstation a Carrier 384 Well Plate p/n 613031 can be modified to contain 1 to 3 mixing modules. For each mixing module a solenoid type trigger is build into the carrier corresponding to the intended position of the mixing module and a cable for each trigger is connected to an I/O Option Board provided in the workstation. The I/O Option Board and thereby the triggers can be controlled by various software packages supplied by Tecan, for example Gemini, TOPS or FACTS.

For example, the tray element could be adapted to dispense the reagent using a linear movement or it could be modified to retain a liquid. Further, the tray element could be replaced with a retainer element which could hold a number of reagents to be released individually, for example in the form of a drum element with a number of compartment, the drum element being such arranged that each partial rotation would result in a reagent being released. It would also be possible to allow such a retainer element to travel with respect to the different vessels located in the module. With respect to the vessel holder in figure 2 this could be achieved by an arrangement in which the wall members were connected as a unit and allowed to travel forth and back on top of the base portion.

## Claims

1. A mixing module for a chemical analyzer, comprising a first receptacle (200) for receiving and retaining a first reagent, a second receptacle (106) for receiving and retaining a second reagent, said first receptacle being displaceable between a first position in which the first reagent is retained and a second position in which the reagent is released or dispensed from said first receptacle into the second receptacle for containing the second reagent, **characterized in that** said mixing module further comprises a release element (300) being displaceable between a first position in which it supports the first receptacle in its first position and a second position in which the first receptacle is displaceable to its second position.

2. A mixing module as defined in claim 1, ***characterized in that*** the first receptacle and/or the release element is pivotally displaceable between their respective first and second positions.

3. A mixing module as defined in claim 1 or 2, ***characterized in that*** it comprises more than one first receptacle.

4. A mixing module as defined in claim 1 or 2, ***characterized in that*** the first receptacle is provided with two or more trough-like depressions adapted to retain two or more reagents, the receptacle being displaceable between a corresponding number of positions in which each displacement results in the release of a reagent from said first receptacle.

5. A mixing module as defined in claim 1, wherein the second receptacle is in the form of a vessel placed in a vessel holder.

6. A chemical analyzer (20) in combination with a mixing module as defined in any of claims 1 to 5.

7. A chemical analyzer according to claim 6, **characterized in that** the mixing module is re-mountable.

8. A chemical analyzer according to claim 6 or 7, wherein the actuating movement for pivotally displacement of the first receptacle between its first and second positions is executed by a sample distribution arm of the analyzer.

9. A chemical analyzer according to any one of claims 6 to 8, capable of performing a sequence of steps in a test procedure ***characterized by*** comprising:
- a mixing module (100), the mixing module being adapted to receive and retain at least first and second reagents to be mixed as well as means for containing the mixed reagents,
- means for actuating the assembly in order to release at least the first reagent into the second reagent to thereby mix the reagents, and
- programmable control means allowing an operator to program and thereby control a sequence of steps to be performed by the analyzer, the actuating means being controllable by the control means.

10. A chemical analyzer as defined in any one of claims 6 to 9, ***characterized in that*** the analyzer is adapted to receive and retain the mixing module in a specific location.

## Patentansprüche

1. Mischmodul für eine chemische Analysiereinrichtung mit einem ersten Behältnis (200) für ein Aufnehmen und Halten eines ersten Reaktionsmittels, einem zweiten Behältnis (106) für ein Aufnehmen und ein Halten eines zweiten Reaktionsmittels, wobei das erste Behältnis zwischen einer ersten Position, bei der das erste Reaktionsmittel gehalten wird, und einer zweiten Position, bei der das Reaktionsmittel freigegeben oder von dem ersten Behältnis zu dem zweiten Behältnis zum Aufbewahren des zweiten Reaktionsmittels abgegeben wird, versetzbar ist,
**dadurch gekennzeichnet, dass**
das Mischmodul des Weiteren ein Freigabeelement (300) aufweist, das zwischen einer ersten Position, bei der es das erste Behältnis bei seiner ersten Position stützt, und einer zweiten Position versetzbar ist, bei der das erste Behältnis zu seiner zweiten Position versetzbar ist.

2. Mischmodul gemäß Anspruch 1,
**dadurch gekennzeichnet, dass**
das erste Behältnis und / oder das Freigabeelement zwischen ihre jeweiligen ersten und zweiten Positionen drehbar versetzbar ist / sind.

3. Mischmodul gemäß Anspruch 1 oder 2,
**dadurch gekennzeichnet, dass**
es mehr als ein erstes Behältnis aufweist.

4. Mischmodul gemäß Anspruch 1 oder 2,
**dadurch gekennzeichnet, dass**
das erste Behältnis mit zwei oder mehr wannenartigen Vertiefungen versehen ist, die daran angepasst sind, zwei oder mehr Reaktionsmittel zu halten, wobei das Behältnis zwischen einer entsprechenden Anzahl an Positionen versetzbar ist, bei denen jede Versetzung zu der Freigabe eines Reaktionsmittels von dem ersten Behältnis führt.

5. Mischmodul gemäß Anspruch 1, wobei
das zweite Behältnis die Form eines Gefäßes hat, das in einem Gefäßhalter angeordnet ist.

6. Chemische Analysiereinrichtung (20) in Kombination mit einem Mischmodul gemäß einem der Ansprüche 1 bis 5.

7. Chemische Analysiereinrichtung gemäß Anspruch 6,
**dadurch gekennzeichnet, dass**
das Mischmodul erneut montierbar ist.

8. Chemische Analysiereinrichtung gemäß Anspruch 6 oder 7, wobei
die Betätigungsbewegung für ein drehbares Versetzen des ersten Behältnisses zwischen seiner ersten und seiner zweiten Position durch einen Probenverteilarm der Analysiereinrichtung ausgeführt wird.

9. Chemische Analysiereinrichtung gemäß einem der Ansprüche 6 bis 8, die dazu in der Lage ist, eine Abfolge von Schritten bei einer Versuchsprozedur auszuführen,
**dadurch gekennzeichnet, dass**
sie folgendes aufweist:
- ein Mischmodul (100), wobei das Mischmodul daran angepasst ist, dass es zumindest ein erstes und ein zweites Reaktionsmittel aufnimmt und hält, die zu vermischen sind, und auch eine Einrichtung zum Aufbewahren der gemischten Reaktionsmittel,
- eine Einrichtung für ein Betätigen der Baugruppe, um zumindest das erste Reaktionsmittel zu dem zweiten Reaktionsmittel freizugeben, um **dadurch** die Reaktionsmittel zu mischen, und
- eine programmierbare Steuereinrichtung, die ermöglicht, dass ein Anwender eine Abfolge von Schritten programmiert und **dadurch** steuert, die durch die Analysiereinrichtung auszuführen sind, wobei die Betätigungseinrichtung durch die Steuereinrichtung steuerbar ist.

10. Chemische Analysiereinrichtung gemäß einem der Ansprüche 6 bis 9,
**dadurch gekennzeichnet, dass**
die Analysiereinrichtung daran angepasst ist, das Mischmodul an einem spezifischen Ort aufzunehmen und zu halten.

## Revendications

1. Module de mélange pour appareil d'analyse chimique, comprenant un premier réceptacle (200) destiné à recevoir et retenir un premier réactif, un deuxième réceptacle (106) destiné à recevoir et retenir un deuxième réactif, ledit premier réceptacle étant déplaçable entre une première position dans laquelle le premier réactif est retenu et une deuxième position dans laquelle le réactif est libéré ou délivré dudit premier réceptacle dans le deuxième réceptacle destiné à contenir le deuxième réactif, **caractérisé en ce que** ledit module de mélange comprend en outre un élément de libération (300) déplaçable entre une première position dans laquelle il soutient le premier réceptacle à sa première position et une deuxième position dans laquelle le premier réceptacle est déplaçable jusqu'à sa deuxième position.

2. Module de mélange tel que défini dans la revendication 1, **caractérisé en ce que** le premier réceptacle et/ou l'élément de libération peuvent se déplacer en pivotant entre leurs première et deuxième positions respectives.

3. Module de mélange tel que défini dans la revendication 1 ou 2, **caractérisé en ce qu'**il comprend plus d'un premier réceptacle.

4. Module de mélange tel que défini dans la revendication 1 ou 2, **caractérisé en ce que** le premier réceptacle est pourvu de deux dépressions ou plus en forme de cuvette adaptées pour retenir deux ou plusieurs réactifs, le réceptacle étant déplaçable entre un nombre correspondant de positions, chaque déplacement se traduisant par la libération d'un réactif dudit premier réceptacle.

5. Module de mélange tel que défini dans la revendication 1, dans lequel le deuxième réceptacle se présente sous la forme d'un récipient placé dans un support de récipient.

6. Appareil d'analyse chimique (20) combiné à un module de mélange tel que défini dans l'une des revendications 1 à 5.

7. Appareil d'analyse chimique selon la revendication 6, **caractérisé en ce que** le module de mélange est réinstallable.

8. Appareil d'analyse chimique selon la revendication 6 ou 7, dans lequel le mouvement entraînant le déplacement pivotant du premier réceptacle entre ses première et deuxième positions est effectué par un bras de distribution d'échantillon de l'appareil d'analyse.

9. Appareil d'analyse chimique selon l'une des revendications 6 à 8, capable d'effectuer une séquence d'opérations d'une procédure d'essai, **caractérisé en ce qu'**il comprend :
un module de mélange (100), le module de mélange étant conçu pour recevoir et retenir au moins un premier et un deuxième réactifs à mélanger ainsi qu'un moyen destiné à contenir les réactifs mélangés,
un moyen pour manoeuvrer l'ensemble afin de libérer au moins le premier réactif dans le deuxième réactif pour les mélanger, et
un moyen de commande programmable permettant à un opérateur de programmer, et par là même de commander, une séquence d'opérations à effectuer par l'appareil d'analyse, le moyen de manoeuvre pouvant être commandé par le moyen de commande.

10. Appareil d'analyse chimique selon l'une des revendications 6 à 9, **caractérisé en ce que** l'appareil d'analyse est adapté pour recevoir et retenir le module de mélange dans un emplacement spécifique.
